# EUROPÄISCHE PATENTSCHRIFT

(11) **EP 1 015 648 B1**
(45) Veröffentlichungstag und Bekanntmachung des Hinweises auf die Patenterteilung: **07.11.2001**
(21) Anmeldenummer: 98949920.7
(22) Anmeldetag: 20.08.1998
(51) Int. Cl.: C22B 5/10, C22B 4/06, C22C 1/02, C22C 29/02, C22C 29/10, C09K 3/14, C04B 35/56

(54) **HARTSTOFFLEGIERUNG AUF BASIS VON TITANCARBID, SCHMELZVERFAHREN ZU DEREN HERSTELLUNG SOWIE DEREN VERWENDUNG**
HARD MATERIAL TITANIUM CARBIDE BASED ALLOY, METHOD FOR THE PRODUCTION AND USE THEREOF
ALLIAGE DUR A BASE DE CARBURE DE TITANE, SON PROCEDE DE PRODUCTION AINSI QUE SON UTILISATION

(30) Priorität: 19.09.1997 DE 19741418
(43) Veröffentlichungstag der Anmeldung: 05.07.2000
(73) Patentinhaber: Treibacher Schleifmittel AG, A-9523 Villach-Landskron (AT)
(72) Erfinder: BUCAR, Wolfgang, D-79725 Laufenburg (DE); ZEIRINGER, Hans, A-8321 Kappel (AT)
(74) Vertreter: Neunert, Peter Andreas
(86) Internationale Anmeldenummer: DE9802425
(87) Internationale Veröffentlichungsnummer: WO9915705

(56) Entgegenhaltungen:
- DD-A- 224 057
- DE-B- 1 049 290
- US-A- 3 758 662
- US-A- 4 132 534
- US-A- 4 643 983
- US-A- 5 194 237
- US-A- 5 401 694
- DATABASE WPI Section Ch, Week 7647 Derwent Publications Ltd., London, GB; Class L02, AN 76-88140X XP002091554 & SU 466 833 A (DRUZHININ L K) , 16. April 1976

## Beschreibung

Die Erfindung betrifft ein Verfahren zur Herstellung eines Schleifkorns aus einer Hartstofflegierung auf Basis von Titan-Carbid mit Legierungsanteilen aus der Gruppe der Carbide, Nitride und/oder Boride der Nebengrupppen IVb, Vb und VIb des Periodensystems.

Schleifmittel lassen sich vereinfacht in zwei große Gruppen einteilen. Bei den sogenannten konventionellen Schleifmitteln werden als Schleifkörnung Korund, Siliziumcarbid oder andere abrasive Verbindungen eingesetzt, die schon relativ lange bekannt sind, kostengünstig hergestellt oder gewonnen werden können, deren Leistungsfähigkeit jedoch durch mangelnde Härte oder fehlende Zähigkeit oder sonstige für den Schleifprozeß ungünstige Eigenschaften, wie chemische Reaktivität o.a., eingeschränkt ist. In der neueren Zeit werden daher vermehrt die sogenannten Super-Abrasives, wie Diamant und kubisches Bornitrid, eingesetzt, die sich durch extrem hohe Härte und eine daraus resultierende hohe Leistungsfähigkeit als Schleifmittel auszeichnen. Der Nachteil der Super-Abrasives sind die hohen Herstellkosten des Schleifkorns selber. Die Kosten liegen beim eintausend- bis zehntausendfachen im Vergleich zu den Herstellkosten für konventionelle Schleifkörner, bezogen auf die äquivalente Menge an Schleifkorn. Für bestimmte Anwendungsbereiche errechnet sich aufgrund der Leistungsfähigkeit, der reduzierten Maschinenstillstandszeiten und des geringen Verbrauchs an Schleifmittel selber trotzdem ein günstiges Preis/ Leistungs-Verhältnis. Allerdings ist die Anwendungsbreite der Hochleistungsschleifmittel aufgrund der hohen Herstellkosten eingeschränkt.

Das Ziel dieser Erfindung ist daher die Bereitstellung eines Schleifkorns, das kostengünstig herzustellen ist, aber gleichzeitig in den Eigenschaften den Hochleistungsschleifkörnern nahekommt bzw. sonstige für den Schleifprozeß günstige Eigenschaften aufweist, um damit die Lücke zwischen den Hochleistungsschleifkörnern und den konventionellen Schleifkörnern zu schließen. Gleichzeitig sollte das Schleifkorn für einen möglichst breiten Anwendungsbereich eingesetzt werden können.

Neben hoher Härte muß ein ideales Schleifkorn weitere günstige Eigenschaften, wie hohe Zähigkeit, chemische und thermische Beständigkeit, eine gute Wärmeleitfähigkeit o.a. aufweisen. Wenn man allein die Härte betrachtet, kommen die Carbide, Nitride, Boride bzw. Mischungen daraus den Hochleistungsschleifkörnern am nächsten. So besitzen z.B. die Carbide, Nitride und Boride der Elemente der Übergangsgruppen einen hohen metallischen Charakter und zeichnen sich durch eine hohe Härte und hohe Schmelzpunkte aus. Bezüglich ihrer Zusammensetzung sind diese Verbindungen, abweichend von ihrer stöchiometrischen Formalzusammensetzung, über weite Bereiche stabil. Obwohl in einigen Literaturstellen die Verwendung der Hartstoffe als Schleifkorn oder Schleifmittel bereits diskutiert wird, ist eine kommerzielle Nutzung als Schleifkorn in einem größeren Umfang nicht bekannt.

Gewöhnlich werden die Hartstoffe durch direkte Umsetzung aus den Elementen, durch Reduktion der Oxidpulver in Gegenwart von Kohle, durch Reaktion der Oxidpulver in Gegenwart von Kohle und Stickstoffverbindungen, stickstoffhaltigen Gasen oder borhaltigen Verbindungen, durch Festkörper/Gas-Reaktionen oder durch Gasphasenreaktionen (z.B. aus den Halogenen durch Umsetzung mit organometallischen Verbindungen) hergestellt. In allen o.g. Fällen fällt der Hartstoff als feinteiliges Pulver mit Korngrößen im unteren *µ*m-Bereich an. Für die meisten Anwendungen als Schleifmittel wird jedoch eine dichte, porenfreie und relativ grobe Körnung gefordert. Um eine grobe, dichte und porenfreie Körnung zu erhalten, müssen die Pulver in Gegenwart von Sinterhilfsmitteln und/oder Bindemetallen verdichtet und gesintert werden. Die so hergestellten Sinterkörper weisen jedoch entweder aufgrund der hohen Anteile an Bindemetall nur noch eine beschränkte Härte auf oder zeigen in reiner Form eine so hohe Sprödigkeit, daß sie als Schleifkorn nicht geeignet sind.

Bisher finden daher Hartstoffe in der Schleifmittelindustrie lediglich in feinteiliger Form als Läpp- und Poliermittel eine Anwendung.

In der DE-OS 2 842 042 und der DE-OS 2 646 206 werden Schleifmittelteilchen auf Basis von TiC, TaC und ZrC offenbart, deren Grundmatrix kristalline Titandiboridteilchen enthält. Der Nachteil dieser durch Heißpressen verdichteten Materialien ist die teure Herstellungsmethode und die - trotz des aufwendigen Verfahrens - verbleibende Restporosität, die einen ökonomischen und umfassenden Einsatz im Schleifprozeß erschweren. Es ist nicht bekannt, daß Stoffe dieser Art in nennenswerter Menge in der Schleifmittelbranche eingesetzt werden.

In der DE-PS 1 049 290 wird erwähnt, daß Titancarbid in Kombination mit anderen Carbiden für Schleifzwecke Verwendung gefunden hat. Gleichzeitig wird jedoch auch darauf hingewiesen, daß es aufgrund seiner Sprödigkeit nur wenig eingesetzt wurde.

Aus der US 5,194,237 ist ein Kompositmaterial auf der Basis von Titan-Carbid bekannt, bei dem die Ausgangsstoffe in einem Lichtbogenofen in Argon-Atmosphäre geschmolzen werden. Das Produkt besteht aus Titan-Carbid-Kristallen, die in einer Metallmatrix eingebettet sind.

Aufgabe der Erfindung ist daher, die Bereitstellung eines Verfahrens zur kostengünstigen Herstellung eines Schleifkorns.

Diese Aufgabe wird erfindungsgemäß durch die Merkmale des Anspruchs 1 gelöst.
Die Unteransprüche sind auf vorteilhafte Weiterbildungen der Erfindung gerichtet.
Überraschenderweise wurde gefunden, daß Hartstofflegierungen auf Titancarbidbasis, die über einen Schmelzprozeß hergestellt werden, eine hohe Härte und gleichzeitig auch eine relativ hohe Zähigkeit aufweisen und somit erfolgreich als Schleifkorn eingesetzt werden können.
Als Rohstoffe werden erfindungsgemäß kostengünstige Oxide oder Oxidgemische eingesetzt, die mittels Ruß, Metallen oder anderen Reduktionsmitteln in Gegenwart von kohlenstoff- oder borhaltigen Verbindungen zu den entsprechenden Carbiden oder Boriden umgesetzt werden. Ebenso ist es jedoch auch möglich, die der Legierung entsprechenden Hartstoffpulver direkt oder andere Verbindungen als Ausgangsstoffe einzusetzen. Die Rohstoffmischungen werden im Lichtbogen- oder Plasmaofen wahlweise an Luft oder in inerter Atmosphäre geschmolzen. Zur Herstellung von Nitriden oder Carbonitriden ist es vorteilhaft, in Stickstoffatmosphäre zu arbeiten.
Ein weiterer Weg zur Herstellung der Hartstofflegierungen ist die sog. SHS-Synthese (Self Propagating High Temperature Synthesis), bei der die zur Schmelze bzw. Reaktion erforderliche Temperatur in situ durch entsprechende exotherme Reaktionen der Ausgangsstoffe erzeugt wird.

Der Vorteil der Herstellungmethode über die Schmelze oder das SHS-Verfahren ist, daß zur Herstellung eines dichten Körpers der Hartstofflegierung oder des Hartstoffes keine Metallbindephase notwendig ist.

Das Gefüge der Hartstofflegierung, das einen großen Einfluß auf die Schleifleistung hat, bildet sich direkt aus der Schmelze und kann gegebenenfalls durch eine nachfolgende Wärmebehandlung optimiert werden. Je nach Abkühlbedingungen und Wahl der Ausgangsstoffe zeigen die Primärkristalle der Hartstofflegierung einen Durchmesser von einem bis einigen hundert *µ*m. Bei eutektischer Zusammensetzung und je nach anschließender Glühbehandlung können jedoch auch deutlich feinere Gefüge realisiert werden. Als Produkt erhält man einen geschmolzenen Hartstoffregulus, der durch eine anschließende Zerkleinerung und Siebung zur gewünschten Korngröße bzw. Körnung für den Einsatz in Schleifmitteln aufbereitet wird.

Als feinzerkleinertes Pulver kann die erfindungsgemäße Hartstofflegierung als Ausgangsstoff darüber hinaus zur Herstellung geformter Teile für die Feuerfestindustrie, zur Herstellung von Verschleißteilen und Schneidwerkzeugen eingesetzt werden.

Im folgenden wird die Erfindung beispielhaft erläutert, ohne daß darin eine Einschränkung zu sehen ist.

### Ausführungsbeispiele:

### Beispiel 1:

Ein Oxidgemisch, bestehend aus 3000 g TIO₂ (Bayertitan T, Bayer AG), 2814 g V₂O₃ (Treibacher Ind. AG) wird mit 2372 g Kohlenstoff in Form von Flammruß (Luvocarb-Ruß ungeperlt, Lehmann & Voss & Co.) zur Reduktion der Oxide zu den entsprechenden Carbiden sorgfältig homogenisiert, mittels Kompaktierung (Kompaktor Fa. Bepex) unter einem Druck von 80-110 kN in eine stückige, kompakte Form gebracht und in einem Schmelzreaktor mit Graphitelektrode und wassergekühltem Schmelztiegel im elektrischen Lichtbogen bei 52 V und einer Leistung von ca. 100 kW niedergeschmolzen.
Die Wasserkühlung verhindert eine zu starke Reaktion der Schmelze mit der Kohle- bzw. Graphitauskleidung des Schmelzgefäßes. Aus Vorversuchen hat sich gezeigt, daß zum Teil Kohlenstoff von der Elektrode in die Schmelze aufgenommen wird, dieser aber durch entsprechende Schmelzweise auf ein Minimum reduziert werden kann. Der Bedarf des Kohlenstoffs zur Reduktion der Oxide liegt deshalb unterhalb der berechneten theoretischen Formalzusammensetzung.
Der erstarrte Regulus wird sodann mit den in der Zerkleinerungstechnik üblichen Geräten in die für den jeweiligen Einsatzzweck günstige Körnung nachzerkleinert und klassiert. Das durch dieses Verfahren hergestellte Korn mit der Formalzusammensetzung (Ti_{0,5}V_{0,5})C_{0,8} zeichnet sich durch eine grobkristalline Struktur mit polygonal ausgebildeten Kristallen, mit einer Größe von ca. 30 *µ*m bis einigen 100 *µ*m, nahezu Porenfreiheit und äußerst geringen Gehalten an Sauerstoff und freiem Kohlenstoff aus.
Die Angabe der Formalzusammensetzung erfolgt deshalb, da nicht ausgeschlossen werden kann, daß während der Schmelze im Lichtbogen die Möllerbestandteile in unterschiedlichen Mengen z. T. als Dampfphase abgeführt werden.

### Beispiel 2:

Ein Oxidgemisch aus 4000 g TiO₂, 1802 g MoO₃ (H. C. Starck, Grade I) und der unterstöchiometrisch berechneten Menge an Kohlenstoff von 2250 g wird mit 3 g B₄C (Elektroschmelzwerk Kempten, B₄C-100 mesh) zur Erzielung eines geringen Borgehaltes im Endprodukt (z.B. 0,3% B ) dotiert, sorgfältig gemischt und homogenisiert, durch Kompaktierung in eine stükkige Form gebracht, dann weiters wie unter Beispiel 1 verfahren. Das daraus erzielte Korn mit der ungefähren Zusammensetzung (Ti_{0,8}MO_{0,2}) (C_{0,8,}B) weist durch den Boridgehalt, welcher teilweise in der Gitterstruktur gelöst ist, verbessertes Verschleißverhalten verglichen mit der undotierten Hartstofflegierung auf.

### Beispiel 3:

5000 g Titanoxid werden mit 1875 g Boroxid (B₂O₃) und 2450 g Ruß zur Erzielung einer Hartstofflegierung mit eutektischer Zusammensetzung ( 57+- 2 Mol%TiC) im System TiB₂-TiC gemischt, homogenisiert und wie unter Beispiel 1 weiter bearbeitet.
Das auf diese Weise erzielte Korn weist ein eutektisches Gefüge aus TiC und TiB₂-Kristallen mit einer Größe im Bereich von vorzugsweise 1 bis 10 *µ*m auf und ist aufgrund der Struktur durch besondere Festigkeitseigenschaften gekennzeichnet. Titanoxid kann auch durch einen Oxid-Zusatz aus den IVb, Vb, VIb-Elementen des periodischen Systems teilweise ersetzt werden.

### Beispiel 4:

Eine Rohstoffmischung bestehend aus 5000 g TiO₂, 1548 g Borsäure (H₃BO₃) und 2300 g Flammruß, wird zur Erzielung einer Hartstofflegierung aus dem System TiC-TiB₂ mit einem Anteil von ca. 80 Mol.% TiC und 20 Mol.% TiB₂ gemäß den vorhergehenden Beispielen verarbeitet.
Die Legierung ist durch gleichmäßig verteilte TiB₂-Kristalle mit einer bevorzugten Größe von 1 - 20 *µ*m, eingebettet in einer Grundmatrix aus TiC, gekennzeichnet.

### Beispiel 5:

5000 g Titanoxid und 1545 g ZrO₂ (Baddeleyit BC99 SH, Foskor Ltd.) und 2600 g Kohlenstoff in Form von Flammruß werden wie unter Beispiel 1 verarbeitet. Die fertige Körnung wird sodann in inerter Atmosphäre bei Temperaturen zwischen 1100° C und 2200° C zur Erzielung feiner Entmischungen, bestehend aus Ti-Carbid reichen (Ti, Zr) C-und Zr-Carbid reichen (Zr, Ti) C-Mischkristallen, geglüht.

### Beispiel 6:

Eine Mischung aus 3000 g TiO₂, 2316 g MoO₃ und 1900 g Ruß wird gemäß Beispiel 1 aufbereitet und verarbeitet, mit dem Unterschied, daß die Erschmelzung der Oxid-Rußgemische unter Einleitung von Stickstoff-Gas während des Schmelzprozesses zur Erzielung von Carbonitriden im Endprodukt erfolgt.

Die Bewertung des Schleifvermögens der Hartstofflegierungen erfolgte an Hand des Einkornritztests mit Fraktion 0,5 bis 1 mm im Vergleich zu konventionellen Schleifmitteln nach folgenden Parametern:

| | |
|---|---|
| Werkstoff | 100 Cr 6 (1.3505), Härte 66 HRC |
| Schnittgeschwindigkeit | 30 m/s |
| Werkstückvorschub | 0,5 mm/s |
| Zustellung | 0,020 mm |
| Kühlschmierstoff | 3% Esso BS 40 |

Der angegebene Leistungsfaktor errechnet sich aus dem Quotienten des Querschnitts der Ritzspur bei 1 mm, bezogen auf den Ritzquerschnitt bei einer Ritzlänge von 25 mm.

### Ergebnisse:

| **Schleifstoff** | **Leistungsfaktor A1/A25 %** |
|---|---|
| (Ti_{0,5}V_{0,5}) C (Beispiel 1) | 68 |
| (Ti_{0,8}MO_{0,2}) (C_{0,8}B) (Beispiel 2) | 66 |
| (Ti_{0,5}V_{0,5})C+0,5 % Cu | 76 |
| (Ti_{0,7}MO_{0,3}) C | 65 |
| (Ti_{0,8}Zr_{0,2})C (Beispiel 5) | 75 |
| (Ti_{0,34}Nb_{0,33}V_{0,33})C | 65 |
| TiC_{0,86} unlegiert | 33 |
| | |

| **Vergleichsbeispiele:** | |
|---|---|
| SiC, Korn 36 | 28 |
| CBN | 95 |
| Edelkorund weiß, Alodur^{®} WSK, Korn 36 | 52 |

| | |
|---|---|
| ® Treibacher Schleifmittel, Villach, Österreich | |

## Patentansprüche

1. Verfahren zur Herstellung eines Schleifkorns aus einer dichten und weitgehend porenfreien Hartstofflegierung, bestehend aus einer Titan-Carbid-Basis und Carbiden, Nitriden und/oder Boriden der Nebengruppen IVb, Vb und VIb des Periodensystems, bei dem als Ausgangsstoffe Oxide des Titans und der Elemente der Nebengruppen eingesetzt, in einem Lichtbogen - oder Plasmaofen in Gegenwart von Kohlenstoff als Reduktionsmittel aufgeschmolzen und zu einem Hartstoffregulus umgesetzt werden, und anschließend das Produkt zerkleinert und klassiert wird.

2. Verfahren nach Anspruch 1, **dadurch gekennzeichnet, daß** die Ausgangsstoffe durch direkte exotherme Reaktion miteinander umgesetzt werden.

3. Verfahren nach Anspruch 1 oder 2, **dadurch gekennzeichnet, daß** als Ausgangsstoffe Verbindungen der entsprechenden Elemente eingesetzt werden.

4. Verfahren nach einem oder mehreren der Ansprüche 1 bis 3, **dadurch gekennzeichnet, daß** die Schmelze an Luft, unter Stickstoff oder in inerter Atmosphäre durchgeführt wird.

5. Verfahren nach Anspruch 4, dadurch gekennzeicznet, daß als Inertgas Argon eingesetzt wird.

6. Verfahren nach einem oder mehreren der Ansprüche 1 bis 5, dadurch gkennzeichnet, daß der Ausgangsmischung eine stickstoffhaltige Verbindung als Stickstofflieferant zugesetezt wird, die während der Reaktion unter Bildung von Stickstoff zersetzt wird.

7. Verfahren nach Anspruch 6, **dadurch gekennzeichnet, daß** als stickstoffhaltige Verbindung Harnstoff eingesetzt wird.

8. Verfahren nach einem oder mehreren der Ansprüche 1 bis 7, **dadurch gekennzeichnet, daß** das Produkt - nach erfolgter Schmelze und Zerkleinerung - einer Glühbehandlung bei Temperaturen zwischen 1100 und 2200° C unterzogen wird.

9. Verfahren nach Anspruch 8, **dadurch gekennzeichnet, daß** die Glühbehandlung unter Inertgas, Stickstoff oder im Vakuum erfolgt.

10. Verfahren nach Anspruch 8 oder 9, **dadurch gekennzeichnet, daß** in reduzierender Atmosphäre geglüht wird.

## Claims

1. A process for the manufacture of an abrasive grain from a dense and largely non-porous hard material alloy, consisting of a titanium carbide base and carbides, nitrides and/or borides of sub-groups IVb, Vb and Vib of the periodic system, in which oxides of the titanium and of the elements of the sub-groups are used as starting materials, are melted in an electric arc furnace or plasma furnace in the presence of carbon as a reduction agent and are transformed to a hard material regulus, and then the product is comminuted and classified.

2. A process according to Claim 1,
**characterised in that** the starting materials are transformed by direct exothermic reaction with one another.

3. A process according to Claim 1 or 2,
**characterised in that** compounds of the corresponding elements are used as starting materials.

4. A process according to one or more of Claims 1 to 3,
**characterised in that** the melting is performed in air, under nitrogen or in an inert atmosphere.

5. A process according to Claim 4,
**characterised in that** argon is used as the inert gas.

6. A process according to one or more of Claims 1 to 5,
**characterised in that** a nitrogenated compound, which is decomposed during the reaction with the formation of nitrogen, is added to the starting mixture as nitrogen supplier.

7. A process according to Claim 6,
**characterised in that** urea is used as the nitrogenated compound.

8. A process according to one or more of Claims 1 to 7,
**characterised in that** the product - after melting and comminution has taken place - is subjected to a roasting treatment at temperatures of between 1100 and 2200°C.

9. A process according to Claim 8,
**characterised in that** the roasting treatment takes place under inert gas, nitrogen or in a vacuum.

10. A process according to Claim 8 or 9,
**characterised in that** roasting is performed in a reducing atmosphere.

## Revendications

1. Procédé de production d'un grain abrasif à base d'un alliage dense et largement dépourvu de pores, consistant en une base de carbure de titane et de carbures, nitrures et/ou borures du sous-groupe IVb, Vb et VIb du système périodique, dans lequel comme matières premières on met en oeuvre des oxydes de titane et des éléments des sous groupes, on met en fusion dans un four à arc électrique ou dans un four à plasma en présence de carbone en tant qu'agent de réduction et on fait réagir en un régule de matière dure et ensuite on broie le produit et on le trie.

2. Procédé selon la revendication 1,
**caractérisé en ce que**
les matières premières sont mises à réagir les unes avec les autres, par réaction exothermique directe.

3. Procédé selon la revendication 1 ou la revendication 2,
**caractérisé en ce que**
comme matières premières on met en oeuvre des composés des éléments correspondants.

4. Procédé selon l'une quelconque des revendications 1 à 3,
**caractérisé en ce que**
le produit de fusion est amené à l'air sous azote ou dans une atmosphère inerte.

5. Procédé selon la revendication 4,
**caractérisé en ce que**
comme gaz inerte on met en oeuvre de l'argon.

6. Procédé selon l'une quelconque des revendications 1 à 5,
**caractérisé en ce que**
le mélange de départ cat ajouté à un composé azoté en tant que produit qui fournit de l'azote qui est décomposé pendant la réaction avec formation d'azote.

7. Procédé selon la revendication 6,
**caractérisé en ce que**
comme composé qui contient de l'azote on met en oeuvre de l'urée.

8. Procédé selon l'une quelconque des revendications 1 à 7,
**caractérisé en ce que**
le produit après avoir effectué la fusion et le broyage, est soumis à un recuit à des températures comprises entre 1 100 et 2 200°C.

9. Procédé selon la revendication 8,
**caractérisé en ce que**
le recuit s'effectue sous gaz inerte, azote ou dans le vide.

10. Procédé selon la revendication 8 ou la revendication 9,
**caractérisé en ce qu'**
on recuit en atmosphère réductrice.
